# EUROPEAN PATENT APPLICATION

(11) **EP 1 300 897 A1**
(43) Date of publication of application: **09.04.2003**
(21) Application number: 01810956.1
(22) Date of filing: 02.10.2001
(51) Int. Cl.: H01M 4/00, H01M 14/00, H01G 9/20, D03D 15/00, D03D 1/02

(54) **Segmented mesoporous ceramic electrodes for electrochemical devices and devices made thereof**

(71) Applicant: Sugnaux, Francois, 1807 Blonay (CH)
(72) Inventor: Sugnaux, Francois, 1807 Blonay (CH)

(57) **Abstract**

Novel electroactive semiconductive materials based on self-assembled and nano-templated ceramics allow the fabrication of flexible electrodes and devices, mesoporous electrode materials thereof and composite current collectors.
This invention also relates to electrodes, i.e. anode or cathode, based on nano-templated ceramics, build as flexible members made from mesoporous composites of the electroactive material directly grown from a current collector, optionally as a member exhibiting a high aspect ratio like a ribbon or a cylinder.
Applications for these new self-assembled and nano-templated mesoporous electrodes include electrochemical devices like dye photovoltaic cells, high power batteries, fast electrochromic devices as well as high capacity ultracapacitors.

## Description

### 1. BACKGROUND

Semiconductive ceramics of high surface area vs. weight or volume have been used in four different form of electrodes to provide electrode active material for electrochemical devices like e.g. dye solar cells, ion intercalation batteries and electrochromic devices.

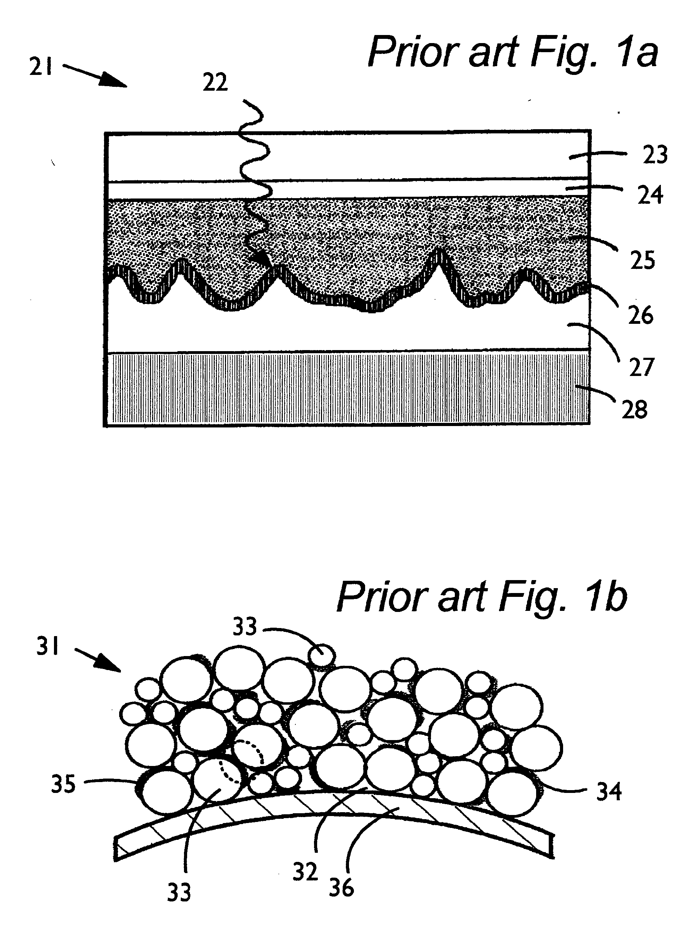

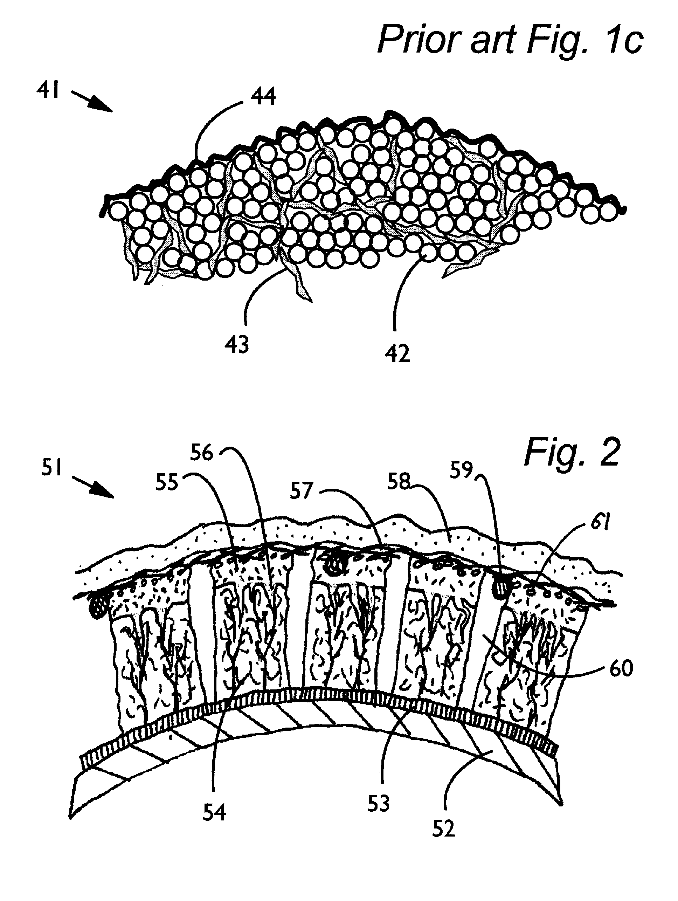

In the first form of electrode (see FIG. 1a), ceramic nanoparticles, typically of 4 to 30 nm have been used as starting material to build a rigid semiconductive three-dimensional mesoporous film, sintered over a rigid conductive glass plate (see e.g Pat. No. EP 333'641, to M. Graetzel et al.). Coating methods like doctor-blading or screenprinting have been used to build such film.

In the second form of electrode, growth of nanostructured ceramic pillars, templated by organic polymers, has provided a rigid film with loosely electrically interconnected "nanorods" of mesoporous anatase (see. e.g. S.D. Bumside et al. Chem. Mater., Vol. 10, No 9, 1998). The thickness of such film is controlled by the reaction conditions (concentration of reagents, temperature) and its duration.

In the third form of electrode (see FIG. 1b), discrete three-dimensional mesoporous microparticles have been used as starting material to build a layer of microparticles assembled onto a current collector, optionally flexible, with a flexible polymeric binder (see e.g. Pat. Appl. EP. 00811081.9, to F. Sugnaux). Coating methods like curtain casting or slot die extrusion have been used to build such composite layer.

In the fourth form of electrode (see FIG. 1c), discrete ceramic nanoparticles have been used as starting material to build a semiconductive three-dimensional porous layer, assembled onto a current collector, optionally flexible, with a dispersed flexible polymeric binder (see e.g. Pat. Appl. EP. 018110286.3, to F. Sugnaux et al.). A coating method like curtain casting has been used to build such composite layer.

All these nanostructured electrodes exhibited outstanding kinetic properties, due to their high surface area as well as their interconnexion between the nanograins of active material. This type of porous materials formed a bicontinuous structure with the electrolyte. The composite electrodes built on a flexible current collector showed a higher industrial utility compared with rigid electrodes, in particular offering the possibility to have a continuous roll-to-roll production, which has a low cost, and more diverse electrode form factors.

However, the production of these interfacial bicontinuous materials for their use in flexible electrodes involved a high number of process steps and in particular steps involving handling loose dispersed nanoparticles, which may require handling large volumes of reaction fluids.

Furthermore, a low resistance electronic contact between discrete particles and flexible current collectors, as well as a high adhesion may be difficult to obtain with previous art electrodes.

Accordingly, there remains a need to develop new and improved porous electrically active electrodes for electrochemical cells built directly onto the current collector into the final requested three-dimensional shape and without needing to first build precursor nano-particles. These electrodes would be exhibiting a high adhesion with a flexible current collector, a precisely distributed porosity favoring fast interactions at their interfaces, a high and homogenous electronic conduction, similar to those obtained from sintered electrodes, and where needed high ion insertion kinetics

Furthermore, there is an urgent need to develop scalable processes for the safe, economical and environmentally friendly production of these improved porous electrodes, particularly in the form of continuous bands and to maintain a tight electrical contact between the electroactive materials composing each electrode, this without impeding their mechanical flexibility and without the use of fluid volatile electrolytes.

### BRIEF SUMMARY OF THE INVENTION

It has been unexpectedly discovered that the oxide materials formed on flexible electrically conductive electrodes into micro-films by nano-templated synthesis with a three-dimensional polymeric network frame still keep most of their electrochemical properties, even if micro-cracks can be observed in the deposited film.
With self-assembly nano-templating techniques, we have gained control over this phenomenon by creating voids between the segments of the layer that still remain bonded on the current collector, this without using inefficient traditional etching or laser ablation techniques. After curing the nano-templated film by thermal or chemical elimination of the organic template, a porous segmented ceramic structure mainly composed from mesopores and directly bonded through a high surface on the current collector is obtained.

Briefly, the invention provides a novel and useful article of manufacture for an electrochemical device that includes at least one porous electrode layer made from a succession of contiguous micron-sized or sub-micron sized segments constituted each from a nano-templated mesoporous solid layer of the electrode active material.

Alternatively, use of copolymers of different nature (for their composition, volume or rigidity) in the templating polymeric network allows a dual mode of porosity and this eventually allowing for preferential fracture or voids pattern of the mesoporous layer.
The mesoporosity can also be controlled to form pores in a preferential direction, e.g. arrays of nanotubes, separated by the controlled voids structure, which provide a preferential electrolyte transport in one direction.

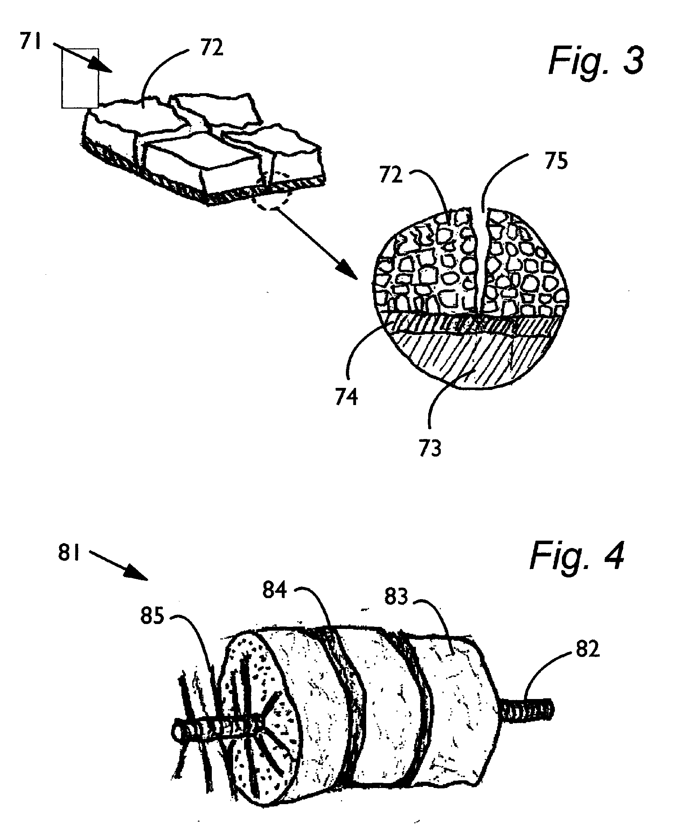

It is a further object of the invention to provide an electrode 71 (see Fig. 3) having segments grown from a current collector initially coated by a dense film composed from bonded ceramic nano-particles, which insures an optimal electronic and mechanical contact.

It is another object of the invention to provide an electrode 81 having segments grown from a current collector 84 initially coated by brush-like secondary conductive members 85 grown from the primary current collector (see Fig. 4).
Alternatively, composite conductive means 57, e.g. conductive polymers-coated carbon nanotubes or conductive fibres mixed within the electroactive material, could be used to build the flexible current collector of the novel structured electrode.

Still another object of the invention is to provide an electrochemical cell 81 exhibiting flexibility in more than one plane, e.g. a fibre coated by a layer with segmented electrode active material, either as a succession of cylindrical segments or spirally wrapped around.

It is still a further object of the invention to provide devices made from a combination of elongated electrodes or electrochemical cells, including a succession of contiguous micron-sized segments, in particular parallel rope, spirally spinned rope, woven textiles or sheet-coated textile meshes.

It is still further another object of the invention to use such electrode combination to build electrochemical cells with functions of dye solar cell (DYSC), that can be used as the structural wall of a gas-tight inflatable objects, like a dirigible airship, blimp or a flying wing. Alternatively, similar structures could be used for other flyable electrochemical devices, e.g. inflatable solar array, airborne electrochromic displays or airborne ion-intercalation batteries.

Other and further objects, features and advantages of the present invention will become clear as the description proceeds and be readily apparent to those skilled in the art in reading the description of preferred embodiments which follows.

### DEFINITIONS

As used herein, the term "mesoporous" refers to pore sizes from 2 nm to 50 nm, according to the definition of Union of Pure and Applied Chemistry (UPAC); materials with pore sizes exceeding 50 nm are denominated as "macroporous".
The term "discrete" refers to distinct elements, having a separate identity, but does not preclude elements from being in contact with one another.
The term "active" refers to a material that is reversibly involved in the electrochemical or photoelectro-chemical conversion process, either as ion intercalating or as a semiconductor sensitised by a dye or interfacing with a redox chromophore.

### BRIEF DESCRIPTION OF THE DRAWINGS

The features of the present invention are further set out in the following examples, wherein like numerals are utilized to designate like parts, given by way of non-limiting example with reference to the accompanying drawings in which:
- FIG. 1a: shows a schematic sectional view of prior art rough film dye-sensitised photoelectrochemical device;
- FIG. 1b: depicts a schematic sectional view of prior art composite mesoporous microparticular electrode;
- FIG. 1c: depicts a schematic sectional view of prior art composite nanoparticular electrode;
- FIG. 2: schematically illustrates a cross-sectional view of a flexible photoelectrochemical cell made according to the present invention, wherein the mesoporous electrode active sections 54 have been dye-sensitised;
- FIG. 3: shows a schematic perspective view of a segmented planar electrode according to the invention, with an enlarged schematic sectional view;
- FIG. 4: shows a schematic perspective view of a segmented cylindrical (fibre) electrode according to the invention.

### DESCRIPTION OF THE PREFERRED EMBODIMENTS

There are many possible uses for new self-assembled and nano-templated mesoporous electrodes in electrochemical devices like dye photovoltaic cells, high power batteries, fast electrochromic devices as well as high capacity ultracapacitors.

A porous electrode layer made from a succession of contiguous micron-sized or sub-micron sized segments constituted each from a nano-templated mesoporous solid layer of the electrode active material could be deposited.

Referring to Fig. 2, a preferred application is shown in which a flexible dye photovoltaic electrochemical cell 51 is built on a flexible current collector, e.g. a wire or thin foil of titanium metal 52, coated with a compact layer of titanium dioxide 53. The electrode active material 54 is composed of anatase that has been nano-templated on e.g cellulose dendrimers and a nano-latex, to form a mesoporous solid body. Fissures 60 which provide flexibility to the cell separate different segments 54. The electrode active material is coated with an hydrophobic dye, e.g. Ruthenium(dicarboxy-bipyridyl)(ditetradecyl-dibipyridyl)(thiocyanate)₂ , previously described by M. Graetzel (1^{st} Int. Conf. Semicond. Photochemistry, U. Strathclyde, July 2001), which allows using a sealing of the cell against moisture which is not critical, hence the fabrication of a flexible cell.

A transparent solid-state hole transporter 55 based on spiro-MeOTAD [see J. Krüger et al., Appl. Phys. Lett. 79(13), 2085-2087 (2001)] is interfacing dendritically on one of its faces 56 with the dye-coated anatase segments and on its other face with a flexible current collector 57 built with graphite fibers dispersed among nano-particles of ITO (indium tin oxide).

More massive current collectors 59 composed from metallic wires, e.g. metallic titanium, can optionally be used for high power solar cells, which need to drain higher currents without resistive restrictions. The cell is enclosed in a transparent flexible polymer film 58.

The need of sealing solar cells in glass, which was in previous art cells the nearly only viable option, has prevented manufacturers to adopt more flexible and thinner cells.
By selecting adequate solid-state cell components that are not sensitive to moisture or oxygen, the well-known sealing problem of cells with a liquid electrolyte can be entirely suppressed. In particular, with intrinsically hydrophobic hole conductors like spiro-MeOTAD and hydrophobic dyes, like molecules of the family of Ruthenium(dicarboxy-bipyridyl)(di[higher alkyl]-dibipyridyl)(thiocyanate)₂ , very little degradation occurs in open cells: ([higher alkyl] comprise chains of 6 C atoms like hexyl to 30 C atoms).

In this preferred type of cells, the function of the polymer film 58 can remain only a mechanical protection against wear or scratches, so a pore-free moisture barrier film is not mandatory.

A new type of flexible particulate current collector electrode 57 composed from carbon-based fibers (e.g. graphite) in percolating contact, optionally also in contact with nanoparticles 61 of transparent and conductive ITO (indium tin oxide), provides an improved flexibility and wear resistance to the electrode.

## Claims

1. An electrochemical cell comprising a nanostructured electrode composed of at least one mesoporous semi-conductive ceramic member split by at least one fissure into separate sections, which are in electrical contact on one of their sides with an electrically conductive member.

2. An electrochemical cell according to claim 1 wherein the electrically conductive member is not rigid, so as the ratio of member thickness vs. the equivalent circle diameter that can be attributed to the curvature is more than 1 over 1'000.

3. An electrochemical cell according to any of claims 1 or 2 wherein the electrically conductive member is coated by a dense semi-conductive ceramic film of less than one micrometer of thickness.

4. An electrochemical device including an electrochemical cell selected from the group of photoelectrochemical cell, electrochromic cell, electrochemical generator and double-layer capacitor, comprising at least:
• an electrode active material composed of at least one mesoporous semi-conductive member split by at least one fissure into separate sections, and in intimate contact therewith,
• an electrical conduction means directly operatively associated with the electrode active material, without a polymeric composite linking means.

5. An electrochemical device including a photoelectrochemical cell comprising at least:
• an electrode active material composed of at least one mesoporous semi-conductive transparent or translucent member split by at least one fissure into separate sections, and in intimate contact therewith,
• an electrical conduction means directly operatively associated with the electrode active material, without a composite linking means.

6. An electrochemical cell according to claim 5 wherein the electrical conduction means is allowed to include pores or voids in contact with the atmosphere surrounding the cell.

7. An electrochemical cell according to any claims claim 1 to 6 comprising a semitransparent flexible particulate conduction means composed from carbon-based fibers (e.g. graphite) in percolating contact with each other, optionally also in contact with nanoparticles of transparent and conductive ITO (indium tin oxide).

8. An electrochemical cell according to claim 7 further comprising said semitransparent flexible particulate conductive means in electrical contact with a secondary massive conductions means composed from a metallic wire.

9. An electrochemical cell according to any claims 1 to 8 wherein said mesoporous semi-conductive ceramic member further comprises a secondary macroporous pore network organized in a preferential radial direction vs. said conductive member.

10. An electrochemical cell according to any claims 1 to 9 wherein said mesoporous semi-conductive ceramic member further comprises dendrites of hole conductor material protruding into said member.

11. An electrochemical cell according to any claims 1 to 10 wherein said conductive member further comprises secondary conductive bodies extending sidewise from said electrical conductive member.

12. An electrochemical cell according to any claims 1 to 11 wherein said fissure runs in a spiral mode around the elongated cell formed in the form of a fiber.

13. An electrochemical cell according to any claims 1 to 12 wherein a multiplicity of cells can be combined in a textile object selected from the group composed of a rope made from parallel fibers, a spirally spinned rope, a woven textile or sheet-coated textile mesh.

14. An electrochemical cell according to claim 13, wherein said sheet-coated textile object can be used to build an inflatable device selected from the group composed of flyable balloon, dirigible airship, blimp, solar array and architectural dome.
